# EUROPEAN PATENT SPECIFICATION

(11) **EP 1 188 321 B1**
(45) Date of publication and mention of the grant of the patent: **09.01.2008**
(21) Application number: 00990780.9
(22) Date of filing: 15.12.2000
(51) Int. Cl.: H04N 7/24

(54) **TELEVISION**
FERNSEHGERÄT
TELEVISION

(30) Priority: 23.12.1999 GB 9930648
(43) Date of publication of application: 20.03.2002
(73) Proprietor: NXP B.V., 5656 AG Eindhoven (NL)
(72) Inventor: PORTER, Christopher, R., NL-5656 AA Eindhoven (NL)
(74) Representative: White, Andrew Gordon
(86) International application number: PCT/EP2000/012860
(87) International publication number: WO 2001/049034

(56) References cited:
- WO-A-97/42759
- WO-A-98/14009
- WO-A-99/31882
- US-A- 5 583 576

## Description

The invention relates to a method of and apparatus for enabling the inhibition of television programme display in dependence on the programme content.

A law has been passed in the USA which requires that all television receivers having a display above a certain size sold from 1998 will have to have a means of enabling parents to prevent children from viewing coded programmes containing violence, sex, and bad language. A so called "V-chip" is proposed which will monitor a code transmitted with the television signal and disable the television receiver when the code indicates forbidden programme material including scenes of violence, sex or other matter which might be considered objectionable by some audiences or unsuitable for children.

For example, WO 97/42759 discloses a technique for selectively inhibiting television receiving apparatus from displaying those television channels which are not authorized for viewing, such as unsubscribed television channels and channels with programs which satisfy predetermined content ratings criteria. A rating code representing the content ratings criteria of those channels which a viewer wishes to inhibit from being displayed is obtained. When either channel up or channel down buttons are operated by the viewer, the rating data associated with the next television channel is compared with the rating code to determine if that television channel satisfies the predetermined content ratings criteria. If so, the channel is blocked and another channel having rating data which do not satisfy the predetermined content ratings criteria then is selected and the program broadcast thereon is displayed to permit the viewer to watch channels broadcasting acceptable television programs

In the US V-chip system, the broadcaster rates each programme in four censorship categories. The values for each category are then transmitted simultaneously as part of the extended data services (EDS) of the Closed Captioning (CC) system. The values are transmitted for as long as the programme is on the air.

Using an access control mechanism, the parent sets a threshold for each category. If a rating exceeds the pre-authorised value, the V-chip suppresses the video and audio signals. As the reaction of the V-chip decoder is near instantaneous, the system can easily handle channel hopping. Moreover, the parent does not have to worry about missing content warnings in TV guides or at the start of programmes.

The Electronic Industries Association (EIA) defines the four censorship categories and the number of data bits required to transmit the code:
- MPAA rating (equivalent to film classifications, e.g. 18, PG, etc.) - 3 bits
- violence content advisory level - 2 bits (which allows for a scale of 0 to 3)
- sexual content advisory level - 2 bits
- mature content advisory level - 2 bits.

The same principles apply to a system being field-tested in Canada but, at present, the two are not identical.

All American TV sets built after July 1993 had to include a CC decoder to provide subtitling. Current CC decoders (such as the SAA5252 decoder sold by Philips Semiconductors) are capable of blanking out the TV picture when switched into full-text mode. They also have adequate display features to generate an OSD menu so that parents can program the censorship thresholds.

Unlike teletext, CC data can be recorded and reproduced by a VHS VCR during playback of a programme. Thus recorded and pre-recorded tapes could also contain censorship data.

In Europe, the question of implementing a V-chip type system is altogether more complex than North America. The broadcasters are not regulated by a single government, and cultural and language differences mean variance in acceptable moral standards. Then there are the technical issues of coping with a 625-line TV system that has little spare capacity for extra data signals.

The obvious solution is to use the American system but this has some disadvantages.

First, for broadcasters, the CC signal would occupy valuable teletext transmission capacity (one line would be permanently lost) and different encoding systems would be required

Secondly, it would be very expensive for broadcasters in terms of the duplicate transmission equipment and data bridges (in cable amplifiers) required for both teletext and CC signals.

Thirdly, consumer electronics manufacturers would have additional overheads in providing teletext and CC decoding in every TV set and PC TV card.

The concept of enabling a parent to control viewing of a television receiver using information transmitted by the broadcaster is not new and was proposed in WO83/02208 published on 23rd June 1983. In that document it is proposed that a code is sent via the teletext signal transmitted with the television signal, the code being formed as a selected row number of a given teletext page. Thus the page number and row number is transmitted in the field blanking period on the occurrence of a possibly offensive event. At the receiver a teletext decoder is permanently set to look for the relevant page and identify the row number as and when transmitted. The particular row numbers indicated particular gradings of sound and vision events.

Various other means to convey the code have been proposed which involve the use of PDC signals and wide screen signalling signals as disclosed in WO98/36568 (PHB34135) and extension packets in teletext signals as disclosed in WO98/14009 (PHB34110).

All these arrangements require a parent, or other responsible person, to enter the appropriate codes into the television receiver and/or video recorder. Where a set is being used only by a child whose access to particular types of programme is to be restricted these codes can be entered and then no further action on the part of the parent is necessary. This arrangement is suitable where an individual channel is being viewed or where channel changes are relatively infrequent. When, however, channel hopping or "zapping" is being carried out in order to ascertain whether any program of interest is currently being received a problem occurs when some channels are blanked or scrambled because of the program code. Clearly this slows down the search for a program of interest and will consequently cause annoyance to the viewer who has to select another channel.

It is an object of the invention to enable an editorial function to be exercised over the output of a television receiver by a parent or other person in authority over that receiver and to reduce any annoyance caused to the viewer by receiving blanked or scrambled channels.

The invention provides a method of disabling the sound and/or visual display of a television programme, the method comprising the steps of
i) establishing the authority of the user to define the programme or parts thereof, which are to be disabled,
ii) entering into a memory within the television receiver code words corresponding to a programme classification that it is desired to suppress,
iii) receiving television signals including code words representing the programme classification,
iv) comparing the received code words with the entered code words,
v) disabling the sound and/or visual display in dependence on the result of the comparison,
vi) monitoring television signals including code words representing the programme classification received on further channels while viewing the received channel,
vii) comparing the code words received on the further channels with the entered code words,
viii) causing the further channels to be skipped when changing channels in dependence on the result of the comparison, and
ix) indicating that a selected channel was inhibited when a non-selected channel is displayed.

Monitoring the rating of programmes transmitted on other channels while one channel is being viewed makes it possible to enable a microcontroller to prevent the television from being tuned to a channel presently carrying a television programme whose rating is higher than that currently allowed for viewing. Thus, it is possible to make the receiver automatically skip channels carrying programmes with a currently unallowable classification code, particularly if the viewer is rapidly changing channels or "zapping" in order to find programmes of interest using a channel up/down instruction.

The television receiver includes means for indicating on the display screen that a selected channel was inhibited when a non-selected channel is displayed. This will prevent a viewer from assuming the receiver or remote control unit is faulty when a selected programme (channel) is replaced by a different one.

The method may further comprise the steps of changing channels using an up/down button to select the next channel, the next channel selected being the next channel in the direction of selection which has a permitted classification code.

In this case, the channel number selected will be the next one in the direction defined by the up/down button that has a permitted classification code. As an alternative, where Electronic Programme Guides (EPG) are available the next channel selected may be one transmitting the same type of programme (e.g. films, documentaries, news, drama, comedy, etc.). That is the control processor may cause the next channel showing a given type of programme rather than merely the next available numerical channel.

Alternatively the method may further comprise the step of changing channels using numerical keys, the channel selected being the nearest available channel to the requested channel. Where two channels are equidistant from the requested but unavailable channel various alternatives are possible. One possibility is to choose the channel nearest to the channel currently selected or, alternatively, the one remote from the channel currently selected.

The invention further provides a television receiver including means for enabling an authorised person to disable the sound and/or visual display of a received programme according to a classification code received with the television programme, the television receiver comprising means for establishing the authorisation of the authorised person, non-volatile memory means for storing classification codes entered by the authorised person, means for receiving and detecting classification codes multiplexed with the received television signal, means for comparing the stored classification codes with the received classification code, means for disabling the sound and/or visual display in dependence on the results of the comparison, means for receiving and detecting classification codes multiplexed with further received television signals transmitted on further television channels, means for comparing the stored classification codes with the received classification code multiplexed with the television signals on the further television channels, means for inhibiting tuning to the further television channels in dependence on the result of the comparison, and means for indicating on the display screen that a selected channel was inhibited when a non-selected channel is displayed.

Monitoring the rating of programmes transmitted on other channels while one channel is being viewed makes it possible to enable a microcontroller to prevent the television from being tuned to a channel presently carrying a television programme whose rating is higher than that currently allowed for viewing. Thus, the invention makes it possible to cause the receiver to skip automatically channels carrying programmes with a currently unallowable classification code, if the viewer is rapidly changing channels or "zapping" in order to find programmes of interest using a channel up/down instruction. Consequently, annoyance to the viewer when searching for programmes of interest caused by tuning to channels on which unauthorised programmes are being transmitted is reduced, as channels with inhibited or scrambled pictures are not made available, but rather alternative allowable channels are presented instead.

Such a television receiver may include means for storing the channel numbers of those channels to which tuning is to be inhibited.

This simplifies the task of the control processor in ensuring that the tuner is tuned to a channel having a permitted classification code if the selected channel has a classification code that is not permitted. As an alternative, the non-permitted channels could be stored by name (e.g. BBC1) or by frequency or any other convenient characteristic. A further alternative is to store permitted channels and in this case the processor would be arranged to cause the tuner to select only those stored channels.

The television receiver may include a selector for selecting a new channel to be received, said selector including an up/down button for selecting the next numerically numbered channel, wherein the receiver includes means for selecting the next numbered non- inhibited channel in the direction selected.

Thus a remote control unit may have a programme up/down button by means of which a user changes successively arranged channels. If the next channel has a non-permitted classification code then the control processor causes that channel to be skipped and the next channel having a permitted code is selected for display.

The television receiver may include a selector for selecting a new channel to be received, said selector including a numerical keypad for selecting a desired channel number, wherein the receiver includes means for selecting the closest channel to the selected channel if the selected channel is inhibited.

There may be an in built bias such that when an inhibited channel is selected the next higher (or lower) numbered allowable channel is selected when two permitted channels are equidistant from the selected channel.

As an alternative when a non-permitted channel is selected by a viewer the receiver may include means for selecting the closest channel to the selected channel that is broadcasting the same type of programme as either the current channel or the selected channel if the selected channel is inhibited.

Thus, if the selected channel is broadcasting a documentary programme the closest channel showing a documentary programme and which has a permitted classification code may be selected rather than the nearest permitted channel.

The above and other features and advantages of the invention will be illustrated by and be apparent from the following description, by way of example, of an embodiment of the invention with reference to the accompanying drawings, in which:-
Figure 1 shows a television system for carrying out a method for enabling the inhibition of television programme display in dependence on the programme content;
Figure 2 shows in block schematic form a television programme source for use in the system of Figure 1;
Figure 3 shows a scheme for code words for classifying programmes, the code words being inserted into a teletext extension packet; and
Figure 4 shows in block schematic form a television receiver according to the invention.

While the following description is of a method and apparatus in which the programme classification codes are transmitted and received by means of teletext extension packets the present invention is independent of the method of transportation of these codes and of the actual classification codes to be used. Thus the codes may be transmitted in, inter alia, any of the ways mentioned herein or in the documents referred to herein. The following embodiment is merely an example of one way of implementing the invention.

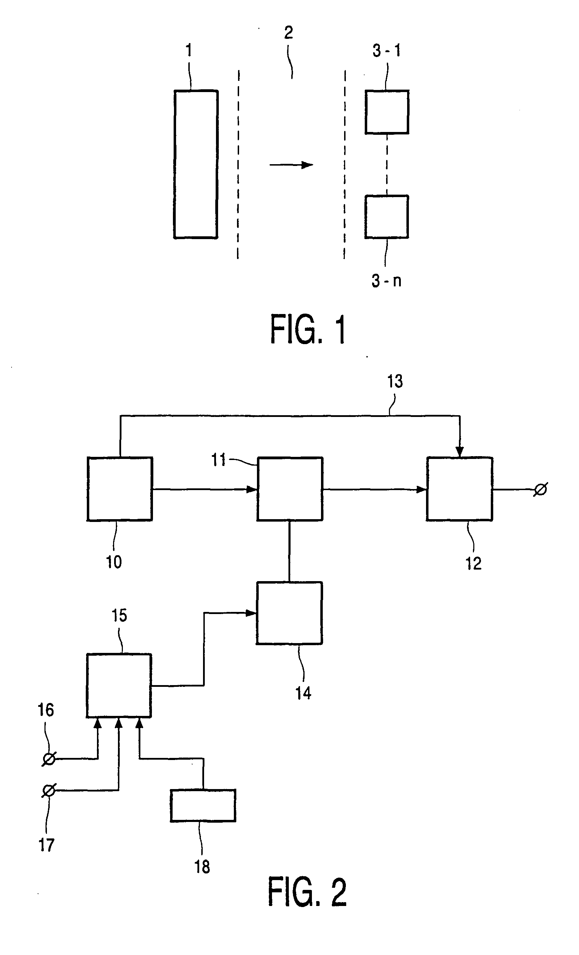

Figure 1 is a block schematic diagram of a system in which methods according to the invention may be carried out. The system shown in Figure 1 comprises a television signal source 1, a television transmission medium 2, and a plurality of television receivers 3-1 to 3-n. The television signal programme source may be a normal television broadcast equipment; either terrestrial broadcast or satellite broadcast or could be the programme source for a cable television network. The television programme source includes a teletext inserter and means for entering programme classification codes into an extension packet of the teletext signal. The transmission medium 2 may take any convenient form for example it could be radio waves as broadcast by a terrestrial transmitter or a satellite transmitter or could be a cable network for a cable TV system. The television receivers 3-1 to 3-n are connected to the programme source via the transmission medium 2. A further possible programme source 1 is a video tape or disc on which a programme is recorded for replay by a video tape recorder or a video disc player in which the case the transmission link 2 may be simply the tape recorder or disc player and a cable connecting the tape recorder or disc player to the television receiver.

An embodiment of a television signal programme source suitable for use in this system is shown in block schematic form in Figure 2. The television programme source comprises a source of video and audio signals 10, which may for example be a television camera whose video output is fed via a teletext inserter 11 to a transmission network 12. The audio output from the television signal source 10 is fed via a line 13 to a further input of the transmission network 12. A conventional teletext editing system 14 is connected to the teletext inserter 11 and has a further input that is fed from a TV access control equipment 15.

The TV access control equipment 15 is arranged to insert into an extension packet of the teletext signal code words classifying the content of the television programme being created by the signal source 10. The TV access control equipment 15 has a first input 16 that receives data from a TV programme scheduling system. This data will for example provide an overall indication of the content of the programme that can be used to inhibit display of that programme at a receiver. The information may for example define the levels of violence, sexual content, mature language or distressing content that may occur in the programme.

The TV access control equipment 15 has a second input 17 that receives data from pre-recorded material. Pre-recorded material may already include the coding to indicate the type of content present in the programme and may also include instantaneous data to classify particular events during a programme. A keyboard or other input device 18 is connected to a further input of the TV access control equipment 15. This is to enable an operator to insert appropriate classification codes into a live programme. It is of course necessary to delay the actual transmission of the programme by a short period so that there is time for the operator to enter the appropriate codes at the appropriate times. Such transmission delays are well known for live programmes to enable the broadcasting authority to cut out any undesirable occurrences. For example in live phone in programmes to cut out any libellous or obscene comments made by a person phoning in.

The codes generated by the TV access control equipment 15 or received by it and passed to the teletext editing system are then inserted into an extension packet of the teletext signal. In particular they may be inserted into selected bytes of the packet 8/30 format 1.

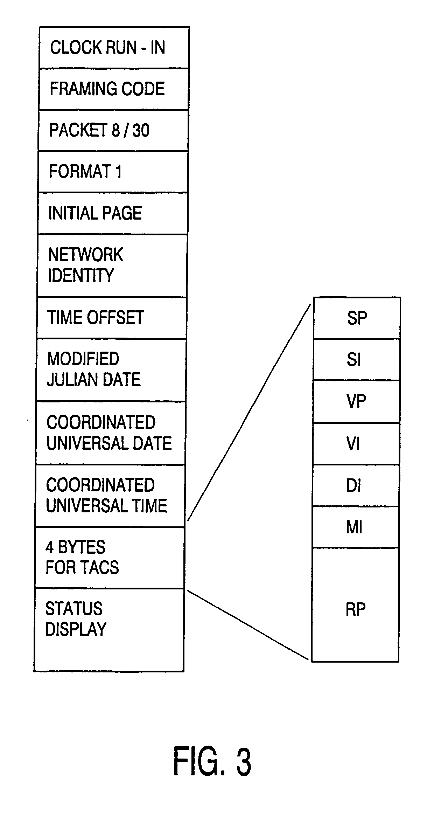

Figure 3 shows the content of packet 8/30 format 1 modified to enable the invention to be carried out. Thus it comprises a clock run in period and framing code and bytes containing information identifying it as packet 8/30, as format 1, defining an initial page, a network identity, a time offset, modified Julian date and co-ordinated universal date and time. There are then four bytes available that are, according to the invention, used to transmit classification codes for the programme. There are then further bytes defining status display.

Four bytes give essentially 32 bits that may be used for encoding data. It is desirable that the classification codes are sent reliably since it would be extremely annoying to a viewer if the programme was interrupted because of faulty reception of the classification codes. This error protection will of course reduce the number of data bits available for encoding the classification codes. In an embodiment according to the invention these four bytes are used to transmit 16 message bits which are 4/8 Hamming coded for error protection. A proposal for allocating these message bits is as follows:
2 bits for sexual content of the whole programme
2 bits for sexual content of individual events within a programme
2 bits for violence content within a programme
2 bits for violent content of incidents within a programme
2 bits for distressing incidents within a programme
2 bits for mature language within a programme and
4 bits for an indication of the region of origin of the programme.

The allocation of two bits for each of the programme content classifications allows four possible levels to be set for that particular content. For example the code 00 could mean no content of that type, the code 01 a low level content, the code 10 a medium level content, and the code 11 a high content level. It is considered useful to have a coding as far as sexual and violent content is concerned for the whole programme and for individual incidents within a programme. Thus for example a parent could decide that programmes having a low or medium sexual content level could be viewed by children so long as the individual events containing sexual content were inhibited. Thus they would set the acceptable programme level to 01, while they may wish to eliminate incidents having sexual content altogether and thus set the event within the programme code to 00. The same considerations apply to violent content within a programme. The distressing content classification is likely to be only of limited duration within a programme. The types of content which are being considered here are for example details where in medical programmes operations are being shown. In this case viewers may well be interested in the medical techniques but find the portrayal of operations distressing. Other instances where distressing content may occur are in news or current affairs programmes. For example interviews with recently bereaved persons may be distressing to some people or pictures showing the effects of famine or other disasters. The mature language content of a programme will normally also be fairly intermittent and hence it is considered that the proscribing of a whole programme on that basis is perhaps not appropriate and that the instances which the mature language occurs can be suppressed.

The region of programme origin code is considered useful in that different areas and countries have different moral codes and consequently what may be classified as a low level of violence in one region may be classified as a medium or even high level of violence in another region. The same considerations may well apply to sexual content and also distressing or mature language content. It would be possible within the receiver to modify the codes for sexual, violent, distressing and mature language content in accordance with the code for the region of origin of the programme. Thus in region 1 medium level sexual content may correspond to high level sexual content in region 2.

It is also possible to bar programmes originating from a given region, for example for political or religious reasons.

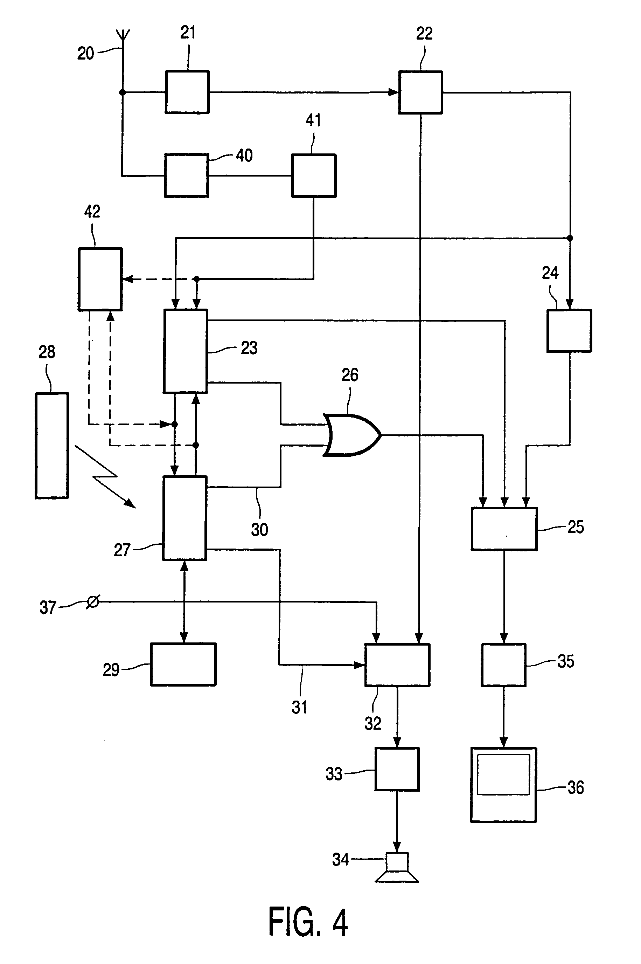

Figure 4 shows in block schematic form an embodiment of a television receiver according to the invention. As shown in Figure 4 the television receiver comprises an aerial 20 which feeds a first conventional tuner 21 and IF and demodulator block 22. A combined video and blanking signal is available at the output of the block 22 and is fed to a teletext decoder 23 and to a colour decoder 24. The output of the colour decoder 24 is fed to a video selector 25 which also receives a display signal output from the teletext decoder 23 and a blanking signal via an OR gate 26 from the teletext decoder 23.

A control processor 27 controls in conventional fashion the operation of the television receiver. It receives control instructions from a remote control unit 28 that the viewer uses to select a particular channel for display and selects other functions such as teletext display or on screen menu displays. The processor 27 will receive from the teletext decoder 23 the codes which are present in the packet 8/30 format 1, that is the codes representing the content of sexual matter, violent matter, distressing matter or mature language. It will also store within a non volatile memory 29 codes that have been entered by the user using the remote control unit 28, which set the levels of sexual, violent, distressing or mature language content which are acceptable for display. The processor 27 will compare the received codes with the stored codes and depending on the output of that comparison will produce a signal on line 30 which is fed to the video selector 25 via the OR gate 26 and which in appropriate circumstances will cause the video display to be blanked. It will also feed a signal via a line 31 to an audio selector 32 that will cause the audio output to be muted in appropriate circumstances.

The audio selector 32 produces an output which is fed to the standard audio circuits represented by block 33 and to a loudspeaker 34, while the video selector 25 produces an output which is fed to standard video circuits 35 and to a display device 36. The audio selector 32 has a further input fed from a terminal 37 to which an alternative audio source may be connected. This may be for example a tone generator which replaces any offending words by a bleep or it may be connected to an auxiliary channel for example an Audetel channel to provide alternative words for the offensive words. The Audetel channel is a channel proposed for use for providing an audio assistance signal that provides a description of the scene to help the following of a programme by persons unable to see the display screen clearly or at all, for example blind or partially sighted persons. There will normally be some spare capacity on this channel which will enable an alternative word for possibly offensive words to be transmitted by the broadcaster or to be encoded within any programme source since Audetel will be idle while there is dialogue.

Thus far the description of the television receiver shown in Figure 4 is identical to that in our co-pending WO98/14009 (PHB 34110). A television receiver according to the present invention, however, includes a further tuner 40 and IF and demodulator 41, the output of the demodulator 41 feeding either a further input of the teletext decoder 23 or the input of a further teletext decoder 42.

The processor 27 causes the tuner 40 to cycle continuously through all available channels, or all those other than the one to which the tuner 21 is tuned, at a rate which enables the teletext decoder 23 or 42 to detect the codes which classify the programme being transmitted on that channel. The processor 27 then stores an indication of those channels transmitting programmes having currently allowable (or alternatively non-allowable) classification codes. This can conveniently be achieved by storing the permitted (or non-permitted) channel numbers. As an alternative the channel frequency or any other characteristic associated with the channel could be stored. The status of the channel is updated each time the tuner 40 tunes to that particular channel. The processor 27 may use the detection of the classification code for a particular channel as a condition for causing the tuner 40 to tune to the next channel in the cycle. Alternatively the tuner 40 may be controlled such that it tunes to the next channel after a preset time which is sufficient to ensure that a classification code will have been transmitted while it was tuned to that channel. This has the disadvantage that the time interval will be longer than would be necessary, on average, for capturing the classification code. Thus, the time taken to cycle round all the available channels will be greater than the optimum. A further disadvantage is that if for any reason a valid classification code is not received within the given time interval there is no way of waiting for the next transmission of the classification code on that channel.

If only one teletext decoder is used then when the viewer is accessing the teletext service on the channel currently being received using the tuner 21 it will not be possible to monitor the other channels. This is not necessarily a major restriction as it could be arranged that the unavailability will only occur when pages are being captured and not when a page is being viewed. Provided that the viewed page is not one that is frequently updated this would not significantly affect the teletext service. In addition, rapid updating of the classification codes associated with the various channels is not important where the classification codes are valid for the length of a programme, since they will only change at the beginning and end of the programme. Further the updating time, even with two teletext decoders, is not likely to be fast enough to react to shorter time validity of those classification codes that change during the course of a programme to inhibit short video passages or individual words. This is not a major concern since the display of the picture or reproduction of the audio will be inhibited even if a channel transmitting a programme having a non-permitted classification code is accessed.

The processor 27 may be programmed to act in various ways in response to user instructions for channel changes. For example, if the user elects to change channel by means of a channel up/down button then the processor 27 may be arranged to select the next channel (up or down) which has a currently permitted classification code. The processor 27 may, optionally, cause the display to give an indication of when and/or why a channel has been skipped, either using a channel name (e.g. BBC1) or a channel number. In this way the viewer will be informed why a given channel is not accessed, particularly if a channel has been specifically selected and consequently its non-appearance would be more noticeable.

Where a user elects to change channel by entering the desired new channel by number, there are many possibilities for the way in which the processor may be programmed to react. One option is to cause the next higher (or lower) available channel to be accessed. Another possibility where the chosen channel is deemed unsuitable is to change to a channel showing a similar but suitable programme. For example if the chosen channel is showing a documentary programme another channel showing a documentary programme which has an allowed classification may be selected (e.g. the channel having the nearest channel number to the selected but unavailable channel and showing a documentary programme). This will require the receiver to keep a record of the types of programme being transmitted on each receivable channel and one way this may be accomplished is by using a known Electronic Programme Guide (EPG) facility.

From reading the present disclosure, other modifications will be apparent to persons skilled in the art. Such modifications may involve other features which are already known in the design and use of television systems and component parts thereof and which may be used instead of or in addition to features already described herein.

## Claims

1. A method of disabling the sound and/or visual display of a television programme, the method comprising the steps of
i) establishing the authority of the user to define the programme or parts thereof that are to be disabled,
ii) entering into a memory within the television receiver code words corresponding to a programme classification it is desired to suppress,
iii) receiving television signals including code words representing the programme classification,
iv) comparing the received code words with the entered code words,
v) disabling the sound and/or visual display in dependence on the result of the comparison,
vi) monitoring television signals including code words representing the programme classification received on further channels while viewing the received channel,
vii) comparing the code words received on the further channels with the entered code words,
viii) causing tuning to the further channels to be inhibited when changing channels in dependence on the result of the comparison, and
ix) indicating that a selected channel was inhibited when a non-selected channel is displayed.

2. A method as claimed in Claim 1, comprising the step of selecting channels using an up/down button to select the new channel, the new channel selected being the next channel in the direction of selection which has a permitted classification code.

3. A method as claimed in Claim 1, comprising the step of selecting channels using numerical keys, the channel selected being the nearest channel, which has a permitted classification code, to the selected channel.

4. A television receiver including means for enabling an authorised person to disable the sound and/or visual display of a received programme according to a classification code received with the television programme, the television receiver comprising means for establishing the authorisation of the authorised person, non-volatile memory means for storing classification codes entered by the authorised person, means for receiving and detecting classification codes multiplexed with the received television signal, means for comparing the stored classification codes with the received classification code, means for disabling the sound and/or visual display in dependence on the results of the comparison, means for receiving and detecting classification codes multiplexed with further received television signals transmitted on further television channels, means for comparing the stored classification codes with the received classification code multiplexed with the television signals on the further television channels, means for inhibiting tuning to the further television channels in dependence on the result of the comparison, and means for indicating on the display screen that a selected channel was inhibited when a non-selected channel is displayed.

5. A television receiver as claimed in Claim 4, including means for storing the channel numbers of those channels to which tuning is to be inhibited.

6. A television receiver as claimed in Claim 4 or Claim 5, including a selector for selecting a new channel to be received, said selector including an up/down button for selecting the next numerically numbered channel, wherein the receiver includes means for selecting the next numbered non- inhibited channel in the direction selected.

7. A television receiver as claimed in Claim 4 or Claim 5, including a selector for selecting a new channel to be received, said selector including a numerical keypad for selecting a desired channel number, wherein the receiver includes means for selecting the closest channel to the selected channel if the selected channel is inhibited.

8. A television receiver as claimed in Claim 4 or Claim 5, including a selector for selecting a new channel to be received, said selector including a numerical keypad for selecting a desired channel number, wherein the receiver includes means for selecting the closest channel to the selected channel that is broadcasting the same type of programme if the selected channel is inhibited.

## Patentansprüche

1. Verfahren zum Deaktivieren des Klangs und/oder der visuellen Anzeige eines Fernsehprogramms, umfassend die Schritte
i) Herstellen der Autorität des Benutzers, um Programme oder Teile davon zu definieren, die zu deaktivieren sind,
ii) Eingeben von Codeworten in einen Speicher innerhalb des Fernsehempfangsgerätes gemäß einer Programmklassifikation, die zu unterdrücken gewünscht ist,
iii) Empfangen von Fernsehsignalen, die Codeworte beinhalten, die die Programmklassifikation repräsentieren,
iv) Vergleichen der empfangenen Codeworte mit den eingegebenen Codeworten,
v) Deaktivieren des Klangs und/oder der visuellen Anzeige in Abhängigkeit von dem Ergebnis des Vergleichs,
vi) Überwachen von Fernsehsignalen, die Codeworte beinhalten, die die Programmklassifikation repräsentieren, die auf weiteren Kanälen empfangen werden, während der empfangene Kanal gesehen wird,
vii) Vergleichen der auf den weiteren Kanälen empfangenen Codeworte mit den eingegebenen Codeworten,
viii) Auslösen des Einschaltens der weiteren zu sperrenden Kanäle beim Wechseln von Kanälen in Abhängigkeit von dem Ergebnis des Vergleichs, und
ix) Anzeigen, dass ein ausgewählter Kanal gesperrt war, wenn ein nicht ausgewählter Kanal angezeigt wird.

2. Verfahren nach Anspruch 1, umfassend den Schritt Auswählen von Kanälen unter Verwendung einer auf/ab-Taste zur Auswahl eines neuen Kanals, wobei der ausgewählte neue Kanal der nächste Kanal in der ausgewählten Richtung ist, der einen erlaubten Klassifikationscode hat.

3. Verfahren nach Anspruch 1, umfassend den Schritt Auswählen von Kanälen unter Verwendung numerischer Tasten, wobei der ausgewählte Kanal der dem ausgewählten Kanal nächste Kanal ist, der einen erlaubten Klassifikationscode hat.

4. Fernsehempfängergerät, beinhaltend Mittel zur Ermächtigung einer autorisierten Person, den Klang und/oder die visuelle Anzeige eines empfangenen Programms zu deaktivieren gemäß eines mit dem Fernsehprogramm empfangenen Klassifikationscodes, wobei das Fernsehempfangsgerät Mittel zur Herstellung der Autorisation der autorisierten Person, nicht flüchtige Speichermittel zum Speichern von von der autorisierten Person eingegebenen Klassifikationscodes, Mittel zum Empfangen und Detektieren von mit dem empfangenen Fernsehsignal gemultiplexten Klassifikationscodes, Mittel zum Vergleichen der gespeicherten Klassifikationscodes mit dem empfangenen Klassifikationscode, Mittel zum Deaktivieren des Klangs und/oder der visuellen Anzeige in Abhängigkeit von den Ergebnissen des Vergleichs, Mittel zum Empfangen und Detektieren von mit weiteren empfangenen Fernsehsignalen, die auf weiteren Fernsehkanälen übertragen werden, gemultiplexten Klassifikationscodes, Mittel zum Vergleichen der abgespeicherten Klassifikationscodes mit dem mit den Fernsehsignalen auf den weiteren Fernsehkanälen gemultiplexten Klassifikationscode, Mittel zum Sperren des Einschaltens der weiteren Fernsehkanäle in Abhängigkeit von dem Ergebnis des Vergleichs und Mittel zum Anzeigen auf der Bildschirmanzeige, dass ein ausgewählter Kanal gesperrt war, wenn ein nicht ausgewählter Kanal angezeigt wird, umfasst.

5. Fernsehempfangsgerät nach Anspruch 4, beinhaltend Mittel zum Speichern der Kanalnummern der Kanäle, deren Einschalten zu sperren ist.

6. Fernsehempfangsgerät nach Anspruch 4 oder Anspruch 5, beinhaltend eine Auswahlvorrichtung zum Auswählen eines neuen zu empfangenden Kanals, wobei die Auswahlvorrichtung eine auf/ab-Taste zum Auswählen des nächsten numerisch nummerierten Kanals beinhaltet, wobei das Empfangsgerät Mittel zur Auswahl des nächsten nummerierten nicht gesperrten Kanals in der ausgewählten Richtung beinhaltet.

7. Fernsehempfangsgerät nach Anspruch 4 oder Anspruch 5, beinhaltend eine Auswahlvorrichtung zum Auswählen eines neuen zu empfangenden Kanals, wobei die Auswahlvorrichtung ein numerisches Tastenfeld zum Auswählen einer gewünschten Kanalnummer beinhaltet, wobei das Empfangsgerät Mittel zum Auswählen des dem ausgewählten Kanal nächsten Kanals beinhaltet, wenn der ausgewählte Kanal gesperrt ist.

8. Fernsehempfangsgerät nach Anspruch 4 oder Anspruch 5, beinhaltend eine Auswahlvorrichtung zum Auswählen eines neuen zu empfangenden Kanals, wobei die Auswahworrichtung ein numerisches Tastenfeld zur Auswahl einer gewünschten Kanalnummer beinhaltet, wobei das Empfangsgerät Mittel zur Auswahl des dem ausgewählten Kanal nächsten Kanals, der die gleiche Art Programm ausstrahlt, wenn der ausgewählte Kanal gesperrt ist, beinhaltet.

## Revendications

1. Procédé dé désactivation du son et/ou de la visualisation d'un programme de télévision, le procédé comprenant les étapes consistant à :
i) établir l'autorisation de l'utilisateur pour définir le programme ou ses parties qui doivent être désactivées ;
ii) entrer dans une mémoire à l'intérieur du récepteur de télévision des mots codés correspondant à une classification de programme que l'on souhaite supprimer ;
iii) recevoir des signaux de télévision comprenant des mots codés représentant la classification de programme ;
iv) comparer les mots codés reçus avec les mots codés entrés ;
v) désactiver le son et/ou la visualisation en fonction du résultat de la comparaison ;
vi) contrôler des signaux de télévision comprenant des mots codés représentant la classification de programme reçue sur d'autres canaux tout en observant le canal reçu ;
vii) comparer les mots codés reçus sur les autres canaux avec les mots codés entrés ;
viii) entraînant l'accord vers les autres canaux à inhiber lors du changement de canaux en fonction du résultat de la comparaison ; et
ix) indiquer qu'un canal sélectionné a été inhibé lorsqu'un canal non sélectionné est affiché.

2. Procédé selon la revendication 1, comprenant l'étape consistant à sélectionner des canaux à l'aide d'un bouton haut/bas pour choisir le nouveau canal, le nouveau canal sélectionné étant le canal suivant dans la direction de sélection qui possède un code de classification autorisé.

3. Procédé selon la revendication 1, comprenant l'étape consistant à sélectionner des canaux à l'aide de clés numériques, le canal sélectionné étant le canal le plus proche, qui possède un code de classification autorisé, du canal sélectionné.

4. Récepteur de télévision comprenant des moyens destinés à habiliter une personne autorisée à désactiver le son et/ou la visualisation d'un programme reçu selon un code de classification reçu avec le programme de télévision, le récepteur de télévision comprenant des moyens destinés à établir l'autorisation de la personne autorisée, des moyens de mémoire non volatile pour mémoriser des codes de classification entrés par la personne autorisée, des moyens destinés à recevoir et détecter des codes de classification multiplexés avec le signal de télévision reçu, des moyens destinés à comparer les codes de classification mémorisés avec le code de classification reçu, des moyens destinés à désactiver le son et/ou la visualisation en fonction des résultats de la comparaison, des moyens destinés à recevoir et détecter des codes de classification multiplexés avec d'autres signaux de télévision reçus émis sur d'autres canaux de télévision, des moyens destinés à comparer les codes de classification mémorisés avec le code de classification reçu multiplexé avec les signaux de télévision sur les autres canaux de télévision, des moyens destinés à inhiber le réglage aux autres canaux de télévision en fonction du résultat de la comparaison, et des moyens destinés à indiquer sur l'écran de visualisation qu'un canal sélectionné a été inhibé lorsqu'un canal non sélectionné est affiché.

5. Récepteur de télévision selon la revendication 4, comprenant des moyens destinés à mémoriser les numéros de canal de ces canaux pour lesquels l'accord doit être inhibé.

6. Récepteur de télévision selon la revendication 4 ou 5, comprenant un sélecteur pour sélectionner un nouveau canal à recevoir, ledit sélecteur comprenant un bouton haut/bas pour sélectionner le canal numéroté numériquement suivant, dans lequel le récepteur comprend des moyens destinés à sélectionner le canal non inhibé numéroté suivant dans la direction sélectionnée.

7. Récepteur de télévision selon la revendication 4 ou 5, comprenant un sélecteur pour sélectionner un nouveau canal à recevoir, ledit sélecteur comprenant un pavé numérique pour sélectionner un numéro de canal souhaité, dans lequel le récepteur comprend un moyen pour choisir le canal le plus proche du canal sélectionné si le canal sélectionné est inhibé.

8. Récepteur de télévision selon la revendication 4 ou 5, comprenant un sélecteur pour choisir un nouveau canal à recevoir, ledit sélecteur comprenant un pavé numérique pour sélectionner un numéro de canal souhaité, dans lequel le récepteur comprend des moyens destinés à sélectionner le canal le plus proche du canal sélectionné qui diffuse le même type de programme si le canal sélectionné est inhibé.
